# EUROPEAN PATENT APPLICATION

(11) **EP 4 538 579 A1**
(43) Date of publication of application: **16.04.2025**
(21) Application number: 24205788.3
(22) Date of filing: 10.10.2024
(51) Int. Cl.: F16M 11/04, H04M 1/02, F16B 2/12

(54) **HOLDER FOR A HANDHELD DEVICE**

(30) Priority: 10.10.2023 CN 202311308335
(71) Applicant: Wind Mobility Technology (Beijing) Co., Ltd., Beijing (CN)
(72) Inventor: Weisheng, HU, Beijing (CN); Guotai, HE, Beijing (CN); Shenghong, CAI, Beijing (CN)
(74) Representative: Pribic, Jelena

(57) **Abstract**

A holder (100) for a handheld device includes a fixed and moveable portions (102, 104). The fixed portion includes a first engaging portion (108a) and a second engaging portion (108b). The moveable portion includes a third engaging portion (150a) to engage with the first engaging portion, a fourth engaging portion (150b) to engage with the second engaging portion, and an actuation mechanism (140) to selectively actuate the moveable portion between an engaged and a moving configuration. The engaged configuration is when the third engaging portion is moved towards and engages the first engaging portion, and the fourth engaging portion is moved towards and engages the second engaging portion. The moving configuration is when the third engaging portion is moved away from and disengages the first engaging portion and the fourth engaging portion is moved away from and disengages the second engaging portion, allowing the moveable portion to move relative to the fixed portion.

## Description

### FIELD

The present technology relates generally to holders for a handheld device, specifically a holder for a mobile phone.

### BACKGROUND

Holders are commonly used to hold a handheld device, for example a mobile phone, on a personal transport vehicle, such as a scooter, a bicycle, etc. Holders enable users to use and wirelessly charge the mobile phone while driving the personal transport vehicle. However, current holders do not tightly clamp the mobile phone during driving. This results in the mobile phone dropping and may lead to damaging the mobile phone.

Certain prior art approaches have been proposed to tackle the above-identified technical problem.

Korea Patent Application Publication No.: 20180058945A, published on June 4, 2018, assigned to Dayou Holdings Co. Ltd., and entitled *"Multipurpose Tablet Mounting Device",* discloses a multifunctional tablet mounting device having a locking unit to stably fix and mount a tablet.

European Patent Application Publication No.: 3199857A1, published on August 2, 2017, assigned to Durable Hunke and Jochheim GmbH and Co. KG, and entitled *"Tablet Holder for Holding a Mobile Terminal ",* discloses a tablet holder for holding a mobile terminal with a clamping device.

Chinese Utility Model No.: 218543655U, published on February 28, 2023, assigned to Yan Ruiyu, and entitled *"Vehicle-mounted Navigation Mobile Phone Support",* discloses a vehicle-mounted navigation mobile phone stand having a box body, left grip block, first tooth's socket pole, first stopper, first tooth's socket gear, right grip block, second tooth's socket pole, second tooth's socket gear, bottom bracket, a ratch, a connecting block, an expanding spring pole, a screen piece, a fixed block, a hold between the fingers frame and a reset spring.

Chinese Patent Application Publication No.: 114906066A, published on August 16, 2022, assigned to Henzhen Vesany Electronics Co. Ltd., and entitled *"Adsorption and Buckle Type Convertible Adjustment Integrated Equipment Support and Method",* discloses an absorption and buckle type convertible adjustment integration equipment in which the support can be switched between an absorption type or a buckling type.

Chinese Patent Application Publication No.: 107682500A, published on February 9, 2018, assigned to Zhongshan Feiyu Hardware Technology Co Ltd., and entitled *"A Kind of Electronic Mobile Phone Clip of Clamp Structure Up and Down ",* discloses a mobile phone clip with an up and down clamp structure.

German Utility Model No.: 202005002590U1, published on May 17, 2005, assigned to Vincent Shen, and entitled *"Mobile Telephone Holder for a Motor Vehicle has a Main Body, a Fixed Plate to Swing Out, a Toothed Rack to Engage Teeth and a Thrusting Plate* ", discloses a main body with a fixed plate and a toothed rack on one side of the fixed plate.

Chinese Patent Application Publication No.: 112747226A, published on May 4, 2021, assigned to Shandong Foreign Trade Vocational College, entitled *"Tablet Personal Computer Supporting Equipment for English Study",* discloses a tablet personal computer supporting equipment which moves under the action of a threaded rotating shaft.

### SUMMARY

It is an object of the present technology to ameliorate at least some of the inconveniences of the prior art.

In a broad aspect of the present technology, there is provided a holder for a handheld device. The holder having a fixed portion that includes a first engaging portion and a second engaging portion spaced apart from the first engaging portion. The holder further includes a moveable portion which is configured to move relative to the fixed portion, along the first engaging portion and the second engaging portion. The moveable portion includes a third engaging portion configured to engage with the first engaging portion, a fourth engaging portion configured to engage with the second engaging portion and an actuation mechanism. The actuation mechanism is configured to selectively actuate the moveable portion between an engaged configuration and a moving configuration. The engaged configuration is when the third engaging portion is moved towards the first engaging portion to engage the first engaging portion and the fourth engaging portion is moved towards the second engaging portion to engage the second engaging portion. The moving configuration is when the third engaging portion is moved away from the first engaging portion to disengage from the first engaging portion and the fourth engaging portion is moved away from the second engaging portion to disengage from the second engaging portion, thereby allowing the moveable portion to move along the first engaging portion and the second engaging portion.

In some embodiments, the first engaging portion is a first toothed rack having a plurality of teeth and the second engaging portion is a second toothed rack having a plurality of teeth.

In some embodiments, the third engaging portion is a third toothed rack having at least one tooth and the fourth engaging portion is a fourth toothed rack having at least one tooth.

In some embodiments, the holder further includes a connecting rod having a first end configured to operably engage with the actuation mechanism and a second end configured to operably engage with the third engaging portion and the fourth engaging portion.

In some embodiments, the holder further includes a first arm connected to the second end of the connecting rod and operably connected to the third engaging portion and a second arm connected to the second end of the connecting rod and operably connected to the fourth engaging portion. When the actuation mechanism is in the engaged configuration, the first arm and the second arm move the third engaging portion and the fourth engaging portion away from one another, as a result the third engaging portion moves towards and engages with the first engaging portion and the fourth engaging portion moves towards and engages with the second engaging portion. When the actuation mechanism is in the moving configuration, the first arm and the second arm move the first engaging portion and the second engaging portion towards one another, as a result the third engaging portion moves away from and disengages from the first engaging portion and the fourth engaging portion moves away from and disengages from the second engaging portion.

In some embodiments, the third engaging portion includes a first slot in which the first arm is slidably disposed and the fourth engaging portion includes a second slot in which the second arm is slidably disposed.

In some embodiments, the first arm and the second arm are connected to the second end of the connecting rod via a fastener.

In some embodiments, the first arm and the second arm are a unitary piece.

In some embodiments, the actuation mechanism includes a button, the button having a tapered bottom portion abutting the first end of the connecting rod.

In some embodiments, the tapered bottom portion tapers towards a smaller bottom edge of the button.

In some embodiments, the holder further includes including a spring disposed in between the third engaging portion and the fourth engaging portion.

In some embodiments, first engaging portion and the second engaging portion are parallel to one another and fixedly mounted to the fixed portion.

In some embodiments, the moveable portion includes a plate slidably engaging with the fixed portion, and the third engaging portion and the fourth engaging portion are slidably connected to the plate.

In some embodiments, the fixed portion includes a channel in between the first engaging portion and the second engaging portion, the channel extending parallel to the first engaging portion and the second engaging portion, and the plate is sized to fit within the channel.

In some embodiments, the moveable portion includes a track, the plate includes a top surface, and the track is disposed on the top surface of the plate. The third engaging portion is slidably connected to a first portion of the track and the fourth engaging portion is slidably connected to a second portion of the track.

In some embodiments, the plate includes a first edge extending parallel to the first engaging portion and a second edge extending parallel to the second engaging portion. The track extends from the first edge to the second edge, the track disposed orthogonal to the first edge and the second edge.

In some embodiments, the third engaging portion includes a bottom surface defining a groove for receiving the first portion of the track, and the fourth engaging portion comprises a bottom surface defining a groove for receiving the second portion of the track.

In some embodiments, the holder further includes a spring-loaded rod having a first end and a second end. The first end of the spring-loaded rod is connected to the fixed portion, and the second end of the spring-loaded rod is connected to the moveable portion.

In some embodiments, the spring-loaded rod is a first spring-loaded rod disposed along a first edge of the fixed portion. The first spring-loaded rod extends parallel to the first engaging portion. The holder further includes a second spring-loaded rod having a first end and a second end. The first end of the second spring-loaded rod is connected to the fixed portion and the second end of the second spring-loaded rod connected to the moveable portion. The second spring-loaded rod disposed along a second edge of the fixed portion, the second spring-loaded rod extending parallel to the second engaging portion.

For purposes of this application, terms related to spatial orientation such as forwardly, rearwardly, upwardly, downwardly, left, and right, are as they would normally be understood by a user or operator of the personal transport vehicle when the user is on the personal transport vehicle in an upright position and the personal transport vehicle is steered straight-ahead and being at rest on flat, level ground. Terms related to spatial orientation when describing or referring to components or sub-assemblies of the device, separately from the device should be understood as they would be understood when these components or sub-assemblies are mounted to the device.

Implementations of the present technology each have at least one of the above-mentioned aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of implementations of the present technology will become apparent from the following description, the accompanying drawings, and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 depicts a top plan view of a holder with a cover of a fixed portion removed, in accordance with certain non-limiting embodiments of the present technology;
Figure 2 depicts a top plan view of the holder of Figure 1 with the cover of the fixed portion removed;
Figure 3 depicts a close up top plan view of the holder of Figure 1 with the cover of the fixed portion removed;
Figure 4 depicts a cross-sectional view of the holder of Figure 1 taken through line Z-Z of Figure 2; and
Figure 5 depicts a flow chart for using a holder, in accordance with certain non-limiting embodiments of the present technology.

### DETAILED DESCRIPTION

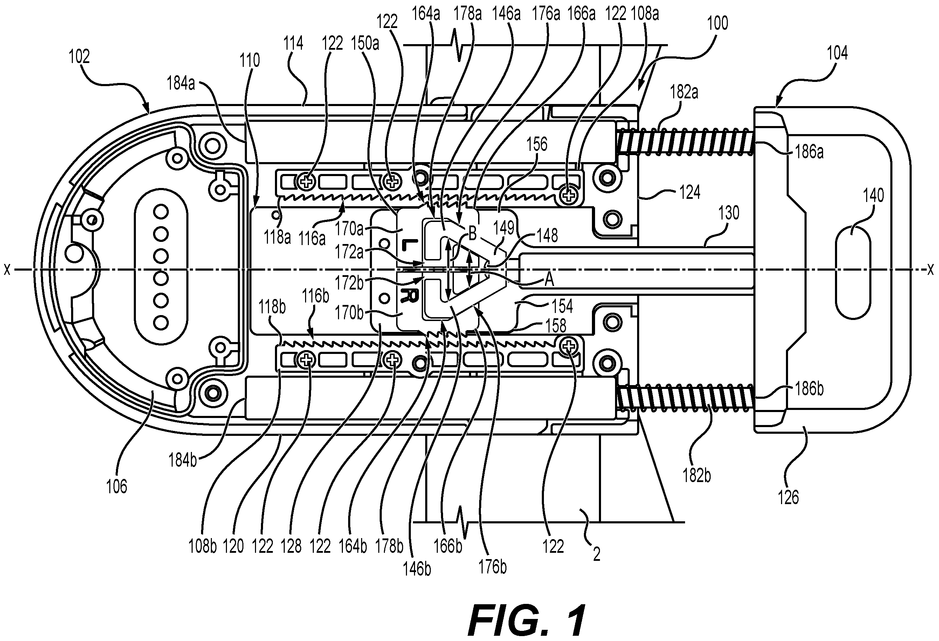

With reference to Figures 1 to 4, there is depicted a holder 100 for a handheld device, such as a mobile phone. The holder 100 is connectable to a personal transport vehicle, such as a scooter or a bicycle. In certain non-limiting embodiment of the present technology, the holder 100 is connected to a handlebar 2 of the personal transport vehicle. It is contemplated that, in an alternative embodiment, the holder 100 may be connected to another suitable location on the personal transport vehicle.

The holder 100 includes a fixed portion 102 and a moveable portion 104 that moves relative to the fixed portion 102. With reference to Figure 1, the moveable portion 104 moves in a linear fashion relative to the fixed portion 102. That is, the moveable portion 104 moves towards and away from the fixed portion 102 along axis X. In certain non-limiting embodiments of the present technology, axis X is co-linear with a longitudinal axis of the fixed portion 102. In other non-limiting embodiments, axis X may extend perpendicular to the longitudinal axis of the fixed portion 102.

With reference to Figures 1 to 3, the fixed portion 102 includes a fixed body 106 having a first engaging portion 108a and a second engaging portion 108b disposed on the fixed body 106. The fixed portion 102 includes a cover (not shown) which covers the fixed body 106. In certain non-limiting embodiments of the present technology, the first engaging portion 108a is a first toothed rack 108a and the second engaging portion 108b is a second toothed rack 108b. The first toothed rack 108a and the second toothed rack 108b are spaced apart from one another. The fixed body 106 defines a channel 110 in between the first toothed rack 108a and the second toothed rack 108b. The channel 110 extends longitudinally along the fixed body 106, parallel to the first and second toothed racks 108a, 108b. The channel 110 slidably receives the moveable portion 104, which will be described in further detail below.

The first toothed rack 108a is spaced apart from and extends parallel to a left edge 114 of the fixed body 106. The first toothed rack 108a includes a plurality of teeth 116a extending along an inner side 118a of the first toothed rack 108a. That is, the first toothed rack 108a is positioned such the plurality of teeth 116a are facing towards the channel 110. The plurality of teeth 116a are angled towards a rear edge 118 of the body 108, such that the plurality of teeth 116a oppose movement of the moveable portion 104 away from the fixed portion 102. It is appreciated that, in alternative embodiments, the first toothed rack 108a may include a single tooth disposed along the inner side 118a of the first toothed rack 108a.

The second toothed rack 108b is spaced apart from and extends parallel to a right edge 120 of the fixed body 106. The second toothed rack 108b includes a plurality of teeth 116b extending along an inner side 118b of the second toothed rack 108b. As the second toothed rack 108b is the same as the first toothed rack 108a (mirror image of one another), the description of the first toothed rack 108a is applicable to the second toothed rack 108b, and thus the second toothed rack 108b will not be explained in further detail.

The first toothed rack 108a and the second toothed rack 108b are fixedly mounted to the fixed body 106. In certain non-limiting embodiments of the present technology, the first toothed rack 108a and the second toothed rack 108b are mounted via fasteners, such as screws 122. In alternative embodiments of the present technology, the first and second toothed racks 108a, 108b may be welded and/or glued to the fixed body 106. In further alternative embodiments, the first and second toothed racks 108a, 108b may be formed integrally with the fixed body 106.

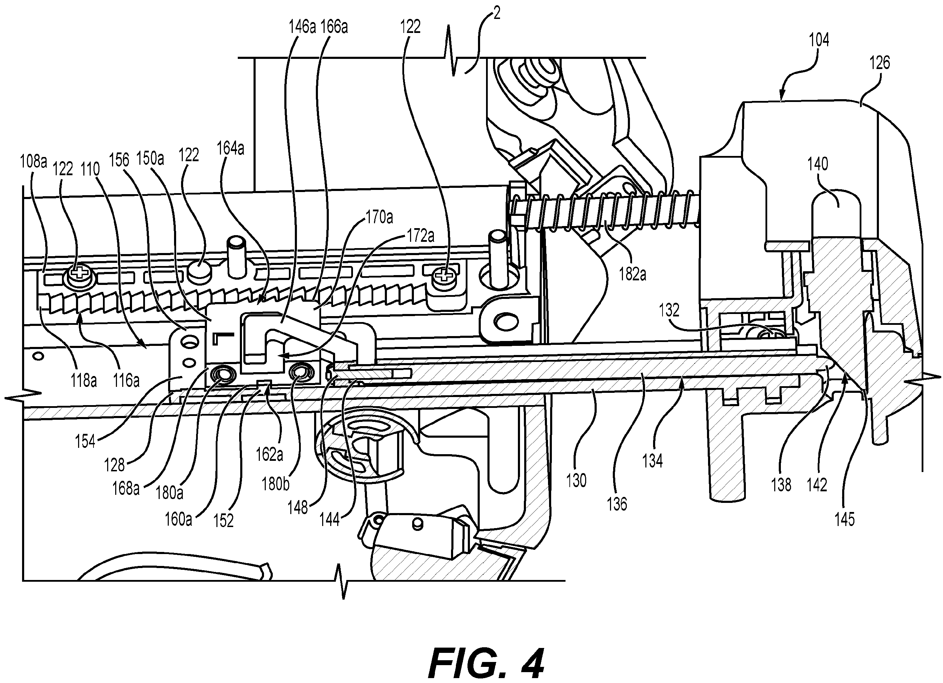

As previously described, the moveable portion 104 moves towards and away from the fixed portion 102. Specifically, the moveable portion 104 includes a moveable body 126 that moves towards and away from a front edge 124 of the fixed body 106. With reference to Figures 1 to 4, the moveable portion 104 includes a plate 128 slidably received in the channel 110 of the fixed body 106. The plate 128 is connected to the moveable body 126 via a connecting arm 130, such that the plate 128 moves with movement of the moveable body 126. In some non-limiting embodiments of the present technology, the connecting arm 130 is formed integrally with the plate 128 and the connecting arm 130 is connected to the moveable body 126 via fasteners, such as screws 132 (as depicted in Figure 4). It is contemplated that the connecting arm 130 may be connected to the plate 128 via fasteners. It is further contemplated that the connecting arm 130 may be formed integrally with the moveable body 126. In other non-limiting embodiments, the connecting arm 130 may be connected to the plate 128 and the moveable body 126 via welding or gluing.

As depicted in Figure 4, the connecting arm 130 defines a passage 134 that slidably receives a connecting rod 136. A first end 138 of the connecting rod 136 operably engages with an actuation mechanism 140 of the moveable portion 104. In certain non-limiting embodiments of the present technology, the actuation mechanism 140 is a button 140. The button 140 includes a tapered bottom portion 142 which tapers down towards a smaller bottom edge 145. The first end 138 of the connecting rod 136 abuts the tapered bottom portion 142. As the button 140 is depressed, the first end 138 of the connecting rod 136 moves along the tapered bottom portion 142, sliding rearwardly, towards the plate 128, within the passage 134. A second end 144 of the connecting rod 136 connects with a pair of arms 146a, 146b (a left arm 146a and a right arm 146b). The left arm 146a operably connects with the third toothed rack 150a and the right arm 146b operably connects with the fourth toothed rack 150b, which will be described in further detail below.

With reference to Figures 1 to 3, the pair of arms 146a, 146b form a generally trapezoidal shape in that the left arm 146a defines half of the trapezoid and the right arm 146b defines the other half of the trapezoid. The pair of arms 146a, 146b connect at a top segment 149 forming the trapezoid as a unitary piece. The pair of arms 146a, 146b are connected via a fastener, such as a screw 148, to the second end 144 of the connecting rod 136. Specifically, the screw 148 fastens the top segment 149 of the trapezoid to the second end 144 of the connecting rod 136. It is contemplated that, in an alternative embodiment, the pair of arms 146a, 146b may be arranged in a different configuration without departing from the scope of the present technology.

With continued reference to Figures 1 to 3, the moveable portion 104 further includes a third engaging portion 150a and a fourth engaging portion 150b. In certain non-limiting embodiments, the third engaging portion 150a is a third toothed rack 150a configured to engage with the first toothed rack 108a. The fourth engaging portion 150b is a fourth toothed rack 150b configured to engage with the second toothed rack 108b. The third toothed rack 150a and the fourth toothed rack 150b are positioned spaced apart from one another in a side-by-side configuration.

The third and fourth toothed racks 150a, 150b are slidably connected to the plate 128 to enable the third toothed rack 150a to move towards and away from the first toothed rack 108a and the fourth toothed rack 150b to move towards and away from the second toothed rack 108b. Specifically, the third and fourth toothed racks 150a, 150b slidably connect with a track 152 is disposed on a top surface 154 of the plate 128. The track 152 extends between a left edge 156 and a right edge 158 of the plate 128. The track 152 is orthogonal to the left and right edge 156, 158, such that the track 152 extends laterally across the top surface 154.

As seen in Figure 4, a bottom surface 160a of the third toothed rack 150a defines a groove 162a which receives a portion of the track 152, allowing the third toothed rack 150a to move towards the first toothed rack 108a (engaging the first toothed rack 108a) and away from the first toothed rack 108a (disengaging the first toothed rack 108a). In certain non-limiting embodiments of the present technology, the groove 162a extends laterally across the entire bottom surface 160a of the third toothed rack 150a, that is from an outer edge 166a to an inner edge 168a of the third toothed rack 150a. It is contemplated that, in alternative embodiments, the groove 162a may extend partially across the bottom surface 160a. It is appreciated that other configurations of the track 152 and the groove 162a may be implemented to provide movement of the third toothed rack 150a without departing from the scope of the present technology.

Although only the third toothed rack 150a is depicted in Figure 4, the fourth toothed rack 150b is the same as the third toothed rack 150a (mirror image of one another) and is slidably connected to the plate 128 to provide outward and inward movement of the fourth toothed rack 150b for engaging and disengaging the second toothed rack 108b. Similar to the third toothed rack 150a, the fourth toothed rack 150b includes a bottom surface defining a channel (not shown), extending between an outer edge 166b to an inner edge 168b, that receives a portion of the track 152. As such, the description of the groove 162a of the third toothed rack 150a is applicable to the fourth toothed rack 150b, and this feature of the fourth toothed rack 150b will not be explained in further detail.

With reference to Figures 1 to 3, the third toothed rack 150a includes a plurality of teeth 164a disposed along the outer edge 166a of the third toothed rack 150a. The plurality of teeth 164a of the third toothed rack 150a are configured to interlock with the plurality of teeth 116a of the first toothed rack 108a. That is, the plurality of teeth 164a of the third toothed rack 150a are angled in the opposite direction to the plurality of teeth 116a of the first toothed rack 108a. When the third toothed rack 150a moves outwards and engages with the first toothed rack 108a, the plurality of teeth 164a of the third toothed rack 150a fit within the recesses of the plurality of teeth 116a of the first toothed rack 150a, creating a secure connection and preventing movement of the movable portion 104 in the forward direction, away from the fixed portion 102. In other words, outward movement of the moveable body 126 is prevented by the interlocking of the plurality of teeth 164a of the third toothed rack 150a and the plurality of teeth 116a of the first toothed rack 108a, providing a tight clamp and preventing accidental dropping of the mobile phone from the holder 100. It is contemplated that, in alternative embodiments, the third toothed rack 150a may include a single tooth configured to engage with the first toothed rack 108a.

A top surface 170a of the third toothed rack 150a defines a slot 172a. The left arm 146a is slidably disposed in the slot 172a. As previously described, the left arm 146a is connected to the second end 144 of the connecting rod 136, such that rearward movement of the connecting rod 136, towards the plate 128, causes the left arm 146a to move rearwardly within the slot 172a. Similarly, forward movement of the connecting rod 136, away from the plate 128, causes the left arm 146a to move forwardly within the slot 172a. The slot 172a is shaped similar to a portion of the left arm 146a that is received in the slot 172a. In other words, the slot 172a is shaped like a rearward portion 174a of the left arm 146a in that the slot 172a includes an angled portion 176a which connects to a straight portion 178a.

The fourth toothed rack 150b is the same as the third toothed rack 150a (mirror image of one another) and includes a plurality of teeth 164b disposed along the outer edge 166b. The plurality of teeth 164b being configured to engage with the second toothed rack 108b. The fourth toothed rack 150b includes a slot 172b, shaped like a rearward portion 174b of the right arm 146b (having an angled portion 176b and a straight portion 176b), in which the right arm 146b is slidably disposed. As such, the description of these features with regards to the third toothed rack 150a is applicable to the fourth toothed rack 150b and thus, will not be explained in further detail.

In certain non-limiting embodiments of the present technology, a pair of springs 180a, 180b are disposed in between the third toothed rack 150a and the fourth toothed rack 150b to assist in biasing the third toothed rack 150a away from the fourth toothed rack 150b, towards the first toothed rack 108a, as well as biasing the fourth toothed rack 150a away from the third toothed rack 150a, towards the second toothed rack 108b. It is contemplated that any number of springs may be used, for example a single spring may be positioned in between the third toothed rack 150a and the fourth toothed rack 150b. It is further contemplated that, in alternative embodiments, the pair of springs 180a, 180b may be omitted.

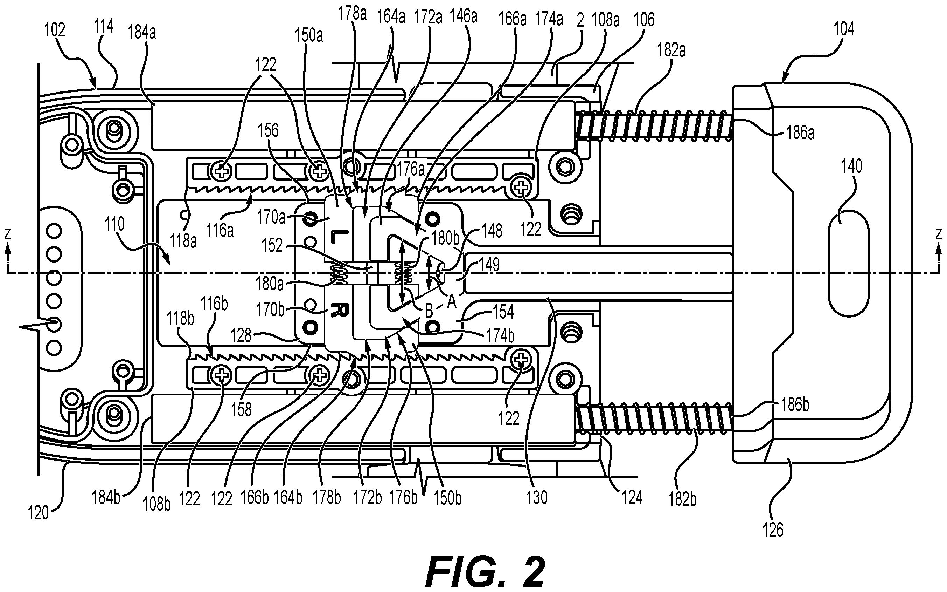

In certain non-limiting embodiments of the present technology, the holder 100 further includes a pair of spring-loaded rods 182a, 182b (a left spring-loaded rod 182a and a right spring-loaded rod 182b) to assist in biasing the moveable body 126 away from the fixed body 106. With reference to Figures 1 and 2, the left spring-loaded rod 182a has a first end 184a connected to the fixed body 106 and a second end 186a connected to the moveable body 126. The left spring-loaded rod 182a is disposed in between the left edge 114 and the first toothed rack 108a and extends parallel to the left edge 114 of the fixed body 106. Similarly, the right spring-loaded rod 182b has a first end 184b connected to the fixed body 106 and a second end 186b connected to the moveable body 126. The right spring-loaded rod 182b is disposed in between the right edge 120 and the second toothed rack 108b and extends parallel to the right edge 120 of the fixed body 106. It is contemplated that, in alternative embodiments, any number of spring-loaded rods may be used, for example a single spring-loaded rod may be used for biasing the moveable body 126 away from the fixed body 106. It is further contemplated that the pair of spring-loaded rods 182a, 182b may be omitted.

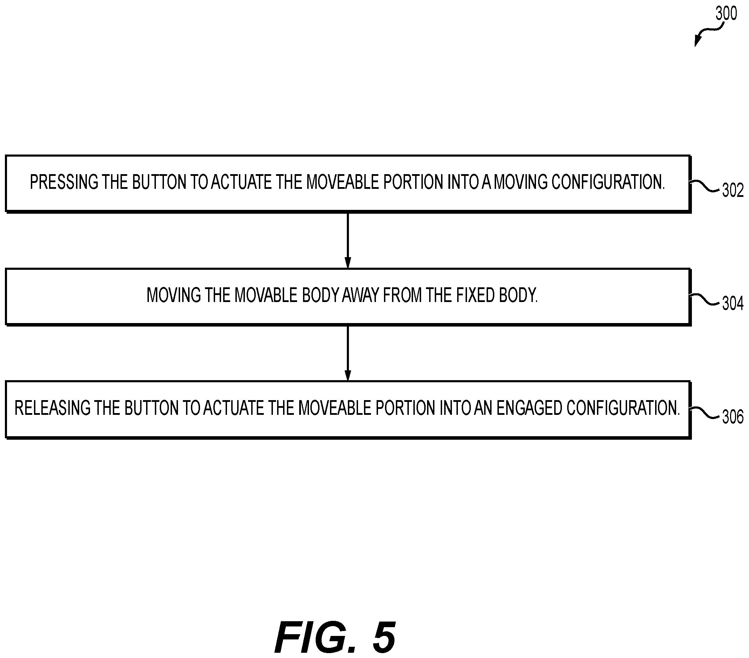

With reference to Figure 5, a method 300 of using the holder 100 will now be described. The method 300 begins with step 302 of pressing the button 140 to actuate the moveable portion 104 into a moving configuration. The method 300 continues with step 304 of moving the moveable body 126 away from the fixed body 106. Finally, once a desired distance is reached, step 306 involves releasing the button 140 to actuate the movable portion 104 into an engaged configuration, locking the position of the moveable body 126 in place.

With reference to Figures 1 and 4, the moving configuration will be described in further detail. Broadly speaking, when in the moving configuration, the moveable portion 104 can move in two directions relative to the fixed portion 102. In some non-limiting embodiments of the present technology, the moveable portion 104 can move along two axes relative to the fixed portion 102. In the present embodiment, the two axes are perpendicular to one another. That is, the moveable portion 104 is configured to move longitudinally as well as laterally relative to the fixed portion 102.

By moving the third toothed rack 150a away from the first toothed rack 108a, the third toothed rack 150a disengages from the first toothed rack 108a. By moving the fourth toothed rack 150b away from the second toothed rack 108b, the fourth toothed rack 150b disengages from the second toothed rack 108b. As a result, the moveable portion 104 can now move towards and away from the fixed portion 102 to accommodate the mobile phone being inserted into the holder 100.

Specifically, upon actuation of the button 140, the connecting rod 136 is moved rearwardly within the passage 134 of the connecting arm 130 as the first end 138 of the connecting rod 136 moves along the tapered bottom portion 142, away from the smaller bottom edge 145 of the button 140 (Figure 4). As the connecting rod 136 moves rearwardly, the second end 144 of the connecting rod 136, in turn, moves the pair of arms 146a, 146b rearwardly within the respective slots 172a, 172b of the third toothed rack 150a and the fourth toothed rack 150b. As depicted in Figure 1, a portion of the pair of arms 146a, 146b which is closer to the top segment 149 is now disposed within the respective angled portions 176a, 176b of the slots 172a, 172b. In other words, as the pair of arms 146a, 146b form the generally trapezoidal shape, the distance between the pair of arms 146a, 146b closer to the top segment 149 is smaller (as denoted by distance A in Figure 1), causing the third toothed rack 150a and the fourth toothed rack 150b to move towards one another. The third toothed rack 150a moves away from and disengages with the first toothed rack 108a, and the fourth toothed rack 150b moves away from and disengages with the second toothed rack 108b. The plate 128 may now move along the channel 110, moving parallel to the first engaging portion 108a and the second engaging portion 108b (that is, along the axis X depicted in Figure 1). As a result, the moveable portion 104 may now be moved freely towards or away from the fixed portion 102 to adjust a distance for receiving or withdrawing the mobile phone from the holder 100.

With reference to Figures 2 to 4, the engaged configuration will now be described in further detail. Broadly speaking, the engaged configuration allows for locking of the moveable portion 104 relative to the fixed portion 102, preventing longitudinal movement of the moveable portion 104. In other words, the engaged configuration prevents movement of the moveable portion 104 towards and away from the fixed portion 102.

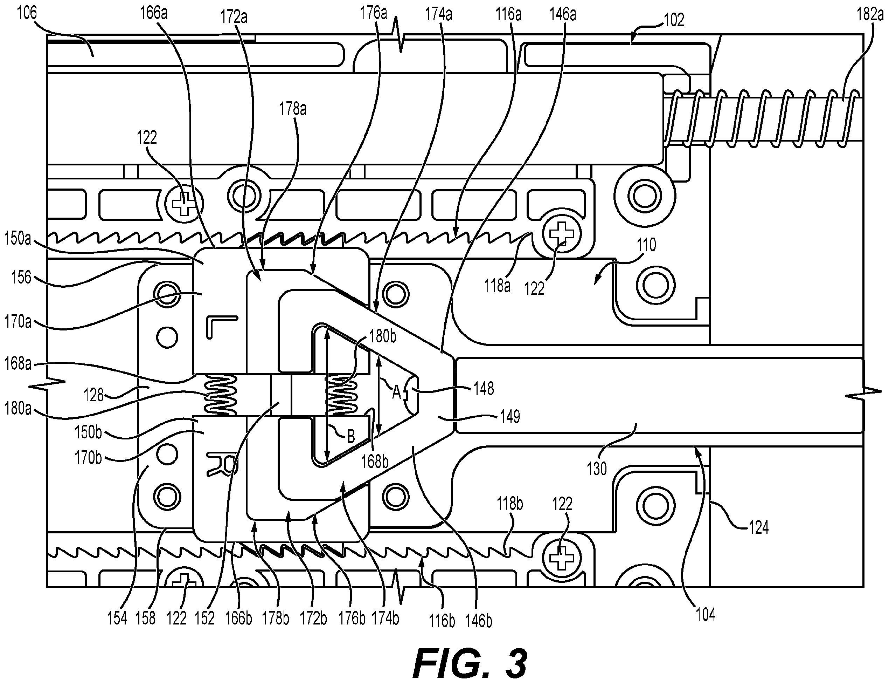

Upon releasing the button 140, the connecting rod 136 is moved forwardly within the passage 134 of the connecting arm 130 as the first end 138 of the connecting rod 136 moves along the tapered bottom portion 142, towards the smaller bottom edge 145 of the button 140 (Figure 4). As the connecting rod 136 moves forwardly, the second end 144 of the connecting rod 136, in turn, moves the pair of arms 146a, 146b forwardly within the respective slots 172a, 172b of the third toothed rack 150a and the fourth toothed rack 150b. As depicted in Figures 2 and 3, the rearward portion of the pair of arms 174a, 174b which is further from the top segment 149 is now disposed within the respective angled portions 176a, 176b of the slots 172a, 172b. The distance between the pair of arms 146a, 146b is larger (as denoted by distance B in Figures 2 and 3), causing the third toothed rack 150a and the fourth toothed rack 150b to move outwards, away from one another. In certain non-limiting embodiments, the springs 182a, 182b disposed in between the third toothed rack 150a and the fourth toothed rack 150b assist in biasing the third and fourth tooth racks 150a, 150b away from one another. The third toothed rack 150a moves towards and engages with the first toothed rack 108a, and the fourth toothed rack 150b moves towards and engages with the second toothed rack 108b. As a result, the moveable portion 104 can be secured in place, preventing movement of the moveable portion 104 towards and away from the fixed portion 102 along the axis X (as indicated in Figure 1) to secure the mobile phone within the holder 100.

It is appreciated that, in the engaged configuration, better retention of the mobile phone may be achieved as a result of greater latching and/or clamping force between the first and the third toothed racks 108a, 150a and the second and the fourth toothed racks 108b, 150b. The greater latching and/or clamping force may be, in part, due to the geometrically complementary shapes of the first and the third toothed racks 108a, 150a and the geometrically complementary shapes of the second and the fourth toothed racks 108b, 150b.

Furthermore, when the moveable portion 104 is moved the distance which accommodates the size of the mobile phone, the longitudinal position of the third and the fourth toothed racks 150a, 150b may be positioned closer to the center of mass of the mobile phone. Thus, the first, the second, the third, and the fourth toothed racks 108a, 108b, 150a, 150b may experience a smaller torque force, reduced wear, and may improve retention of the mobile phone within the holder.

Although the holder 100 has been described with four toothed racks 108a, 108b, 150a, 150b, it is appreciated that any number of toothed racks may be implemented without departing from the present technology.

It is further appreciated that although the first, second, third, and fourth engaging portions 108a, 108b, 150a, 150b have been described as toothed racks, it is contemplated that any other interlocking geometry may be used to engage the first and third engaging portions 108a, 150a together, as well as the second and fourth engaging portions 108b, 150b together. It is further contemplated that any other means to removably connect the first and third engaging portions 108a, 150a together, as well as the second and fourth engaging portions 108b, 150b together may be implemented without departing from the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A holder (100) for a handheld device, the holder comprising:
a fixed portion (102) having:
a first engaging portion (108a); and
a second engaging portion (108b) spaced apart from the first engaging portion; and
a moveable portion (104) configured to move relative to the fixed portion, along the first engaging portion and the second engaging portion, the moveable portion having:
a third engaging portion (150a) configured to engage with the first engaging portion; and
a fourth engaging portion (150b) configured to engage with the second engaging portion; and
an actuation mechanism (140) configured to selectively actuate the moveable portion between:
an engaged configuration in which the third engaging portion is moved towards the first engaging portion to engage the first engaging portion and the fourth engaging portion is moved towards the second engaging portion to engage the second engaging portion; and
a moving configuration in which the third engaging portion is moved away from the first engaging portion to disengage from the first engaging portion and the fourth engaging portion is moved away from the second engaging portion to disengage from the second engaging portion,
thereby allowing the moveable portion to move along the first engaging portion and the second engaging portion.

2. The holder (100) of claim 1, wherein:
the first engaging portion is a first toothed rack (108a) having a plurality of teeth; and
the second engaging portion is a second toothed rack (108b) having a plurality of teeth.

3. The holder (100) of claim 1 or claim 2, wherein:
the third engaging portion is a third toothed rack (150a) having at least one tooth; and
the fourth engaging portion is a fourth toothed rack (150b) having at least one tooth.

4. The holder (100) of any of claims 1-3, further comprising a connecting rod (136) having a first end configured to operably engage with the actuation mechanism and a second end configured to operably engage with the third engaging portion and the fourth engaging portion.

5. The holder (100) of claim 4, further comprising:
a first arm (146a) connected to the second end of the connecting rod and operably connected to the third engaging portion; and
a second arm (146b) connected to the second end of the connecting rod and operably connected to the fourth engaging portion;
wherein:
when the actuation mechanism is in the engaged configuration, the first arm and the second arm move the third engaging portion and the fourth engaging portion away from one another, as a result the third engaging portion moves towards and engages with the first engaging portion and
the fourth engaging portion moves towards and engages with the second engaging portion; and
when the actuation mechanism is in the moving configuration, the first arm and the second arm move the first engaging portion and the second engaging portion towards one another, as a result the third engaging portion moves away from and disengages from the first engaging portion and
the fourth engaging portion moves away from and disengages from the second engaging portion.

6. The holder (100) of claim 5, wherein:
the third engaging portion comprises a first slot (172a) in which the first arm is slidably disposed; and
the fourth engaging portion comprises a second slot (172b) in which the second arm is slidably disposed, and optionally wherein the first arm and the second arm are connected to the second end of the connecting rod via a fastener.

7. The holder (100) of claim 6, wherein the first arm and the second arm together form a trapezoid, and optionally wherein the first arm and the second arm are a unitary piece.

8. The holder (100) of any of claims 1-7, wherein the actuation mechanism comprises a button, the button having a tapered bottom portion abutting the first end of the connecting rod, and optionally wherein the tapered bottom portion tapers towards a smaller bottom edge of the button.

9. The holder (100) of any of claims 1-8, further comprising a spring disposed in between the third engaging portion and the fourth engaging portion.

10. The holder (100) of any of claims 1-9, wherein the first engaging portion and the second engaging portion are parallel to one another and fixedly mounted to the fixed portion.

11. The holder (100) of any of claims 1-10, wherein:
the moveable portion comprises a plate (128) slidably engaging with the fixed portion; and
the third engaging portion and the fourth engaging portion are slidably connected to the plate.

12. The holder (100) of claim 11, wherein:
the fixed portion comprises a channel in between the first engaging portion and the second engaging portion, the channel extending parallel to the first engaging portion and the second engaging portion; and
the plate is sized to fit within the channel, and optionally wherein:
the moveable portion comprises a track (152);
the plate comprises a top surface;
the track disposed on the top surface of the plate;
the third engaging portion slidably connected to a first portion of the track; and
the fourth engaging portion slidably connected to a second portion of the track.

13. The holder (100) of claim 12, wherein:
the plate comprises:
a first edge extending parallel to the first engaging portion; and
a second edge extending parallel to the second engaging portion; and
the track extends from the first edge to the second edge, the track disposed orthogonal to the first edge and the second edge.

14. The holder (100) of claim 13, wherein:
the third engaging portion comprises a bottom surface defining a groove (162a) for receiving the first portion of the track; and
the fourth engaging portion comprises a bottom surface defining a groove for receiving the second portion of the track.

15. The holder (100) of any of claims 1-14, further comprising a spring-loaded rod (182a, 182b) having a first end and a second end and wherein the first end of the spring-loaded rod is connected to the fixed portion, and the second end of the spring-loaded rod is connected to the moveable portion, and optionally wherein:
the spring-loaded rod is a first spring-loaded rod (182a) disposed along a first edge of the fixed portion, the first spring-loaded rod extending parallel to the first engaging portion;
the holder further comprising:
a second spring-loaded rod (182b) having a first end and a second end,
the first end of the second spring-loaded rod is connected to the fixed portion and the second end of the second spring-loaded rod connected to the moveable portion; and
the second spring-loaded rod disposed along a second edge of the fixed portion, the second spring-loaded rod extending parallel to the second engaging portion.
